# EUROPEAN PATENT SPECIFICATION

(11) **EP 3 205 838 B1**
(45) Date of publication and mention of the grant of the patent: **03.04.2019**
(21) Application number: 17155894.3
(22) Date of filing: 13.02.2017
(51) Int. Cl.: F01D 19/02, F02C 7/18

(54) **GAS TURBINE ENGINE MOTORING SYSTEM FOR BOWED ROTOR ENGINE STARTS**
GASTURBINEN ANTRIEBSSYSTEM FÜR TRIEBWERKSTARTS BEI DURCHBOGENEM ROTOR
SYSTÈME DESTINÉ AU CONTRÔLE D'UN MOTEUR À TURBINE À GAZ POUR DÉMARRAGES DE MOTEUR À ROTOR COURBÉ

(30) Priority: 12.02.2016 US 201662294548 P
(43) Date of publication of application: 16.08.2017
(73) Proprietor: Hamilton Sundstrand Corporation, Charlotte, NC 28217-4578 (US)
(72) Inventor: PECH, John T., Canton, CT Connecticut 06019 (US); SPIERLING, Todd A., Rockford, IL Illinois 61109 (US)
(74) Representative: Dehns

(56) References cited:
- EP-A2- 2 305 986
- FR-A1- 2 897 895
- US-A1- 2005 212 466
- US-A1- 2014 123 673
- US-A1- 2014 373 552

## Description

### BACKGROUND

The embodiments herein generally relate to gas turbine engines and more specifically, systems and method for cooling gas turbine engines.

Aircraft gas turbine engines are being designed with tighter internal clearances between engine cases and blades of the compressor and turbine to increase efficiency and reduce fuel burn. These tighter clearances can result in compressor blade tips and turbine blade tips rubbing on the engine cases if the engine core bows as it cools down between flights and an engine start is attempted.

After engine shutdown, the main shafts, compressor disks, turbine disks and other parts with large thermal mass cool at different rates. The heat rises to the top of the engine allowing the lower portions of these parts to become cooler than the upper portions. This causes blade tip clearance between the engine case and blades of the compressor and turbine to decrease as the engine shafts and cases bow temporarily due to uneven thermal conditions. This does not present a problem for the engine unless an engine start is attempted while the bowed condition exists. To address this engine manufacturers have found that motoring the engine at relatively low speed for a period of time prior to engine start allow the parts to achieve uniform thermal conditions and eliminate the bowed condition restoring blade tip to engine case clearances.

The problem is how to motor the engine at very specific speeds for up to four minutes prior to engine start? Pneumatic or Air Turbine Starters are typically duty cycle limited due to lubrication issues and heat dissipation. Butterfly type start valves are typically solenoid actuated and have diaphragms and linkage in the actuator piston assembly that are prone to wear if they are being used to modulate and control starter speed. This type of operation decreases the valve and start life significantly. A more efficient method of motoring the gas turbine engine that does not cause excessive wear and tear is desired.

A method of starting a gas turbine engine is disclosed in US 2014/0123673. FR 2897895 and US 2005/0212466 disclose starters for gas turbine engines. EP 2305986 and US 2014/0373552 disclose starting systems for gas turbines.

### BRIEF DESCRIPTION

According to one embodiment, an engine starting system is provided. The engine starting system comprises: a gas turbine engine including rotational components comprising an engine compressor, an engine turbine, and a rotor shaft operably connecting the engine turbine to the engine compressor, wherein each rotational component is configured to rotate when any one of the rotational components is rotated; a permanent magnet alternator operably connected to at least one of the rotational components, the permanent magnet alternator being configured to rotate the rotational components; a motor controller in electronic communication with the permanent magnet alternator, the motor controller being configured to command the permanent magnet alternator to rotate the rotational components at a selected angular velocity for a selected period of time; and an air turbine starter comprising a turbine wheel including a hub integrally attached to a turbine rotor shaft and a plurality of turbine blades extending radially from the hub, the turbine rotor shaft being operably connected to at least one of the rotational components and configured to rotate the rotational components when air flows through the turbine blades and rotates the turbine wheel.

In addition to one or more of the features described above, or as an alternative, further embodiments of the engine starting system may include an accessory gearbox operably connecting the permanent magnet alternator to at least one of the rotational components.

In addition to one or more of the features described above, or as an alternative, further embodiments of the engine starting system may include where the permanent magnet alternator is configured to generate electricity when the rotational components are rotating under power of the gas turbine engine.

In addition to one or more of the features described above, or as an alternative, further embodiments of the engine starting system may include: an auxiliary power unit fluidly connected to the air turbine starter and electrically connected to the permanent magnet alternator, the auxiliary power unit being configured to generate electricity to power the permanent magnet alternator and provide air to the air turbine starter to rotate the turbine blades.

In addition to one or more of the features described above, or as an alternative, further embodiments of the engine starting system may include: a starter air valve fluidly connecting the auxiliary power unit to the air turbine starter, the starter air valve being configured to adjust airflow from the auxiliary power unit to the air turbine starter.

According to another embodiment, a method of assembling an engine starting system for a gas turbine engine is provided. The method of assembling comprises: obtaining a gas turbine engine including rotational components comprising an engine compressor, an engine turbine, and a rotor shaft operably connecting the engine turbine to the engine compressor, wherein each rotational component is configured to rotate when any one of the rotational components is rotated; operably connecting a permanent magnet alternator to at least one of the rotational components, the permanent magnet alternator being configured to rotate the rotational components; electrically connecting a motor controller to permanent magnet alternator, the motor controller being configured to command the permanent magnet alternator to rotate the rotational components at a selected angular velocity for a selected period of time; and operably connecting an air turbine starter to at least one of the rotational components, the air turbine starter comprising a turbine wheel including a hub integrally attached to a turbine rotor shaft and a plurality of turbine blades extending radially from the hub, wherein the turbine rotor shaft is configured to rotate the rotational components when air flows through the turbine blades and rotates the turbine wheel.

In addition to one or more of the features described above, or as an alternative, in further embodiments of the method of assembling an engine starting system, the permanent magnet alternator is operably connected to at least one of the rotational components through an accessory gearbox.

In addition to one or more of the features described above, or as an alternative, in further embodiments of the method of assembling an engine starting system, the permanent magnet alternator generates electricity when the rotational components are rotating under power of the gas turbine engine.

In addition to one or more of the features described above, or as an alternative, further embodiments of the method of assembling an engine starting system may include: fluidly connecting an auxiliary power unit to the air turbine starter, the auxiliary power unit being configured to provide air to the air turbine starter to rotate the turbine blades; and electrically connecting the permanent magnet alternator to the auxiliary power unit, the auxiliary power unit being configured to generate electricity to power the permanent magnet alternator.

In addition to one or more of the features described above, or as an alternative, in further embodiments of the method of assembling an engine starting system, a starter air valve fluidly connects the auxiliary power unit to the air turbine starter, the starter air valve being configured to adjust airflow from the auxiliary power unit to the air turbine starter.

According to another embodiment, which does not form part of the invention, a method of cooling a gas turbine engine is provided. The method of cooling a gas turbine engine comprises: rotating, using a permanent magnet alternator, rotational components of a gas turbine engine, the rotational components comprising an engine compressor, an engine turbine, and a rotor shaft operably connecting the engine turbine to the engine compressor, wherein each rotational component is configured to rotate when any one of the rotational components is rotated.

In addition to one or more of the features described above, or as an alternative, further embodiments of the method of cooling a gas turbine engine may include controlling, using a motor controller, operation of the permanent magnet alternator, the motor controller being configured to command the permanent magnet alternator to rotate the rotational components at a selected angular velocity for a selected period of time.

In addition to one or more of the features described above, or as an alternative, further embodiments of the method of cooling a gas turbine engine may include: detecting a failure in a starter air valve prior to rotating the gas turbine engine with the permanent magnet alternator, the starter air valve being fluidly connected to an air turbine starter and configured to provide air to the air turbine starter, wherein the air turbine starter is operably connected to at least one of the rotational components and configured to rotate the rotational components.

In addition to one or more of the features described above, or as an alternative, further embodiments of the method of cooling a gas turbine engine may include: detecting when a temperature of the gas turbine engine is less than a selected temperature; and displaying a message on a cockpit display when the temperature of the gas turbine engine is less than a selected temperature.

In addition to one or more of the features described above, or as an alternative, further embodiments of the method of cooling a gas turbine engine may include stopping the utilization of the permanent magnet alternator to rotate the gas turbine engine when a temperature of the gas turbine engine is less than a selected temperature.

In addition to one or more of the features described above, or as an alternative, further embodiments of the method of cooling a gas turbine engine may include opening a starter air valve after the message has been displayed on the cockpit display, the starter air valve being fluidly connected to an air turbine starter and configured to provide air to the air turbine starter, wherein the air turbine starter is operably connected to at least one of the rotational components and configured to rotate the rotational components.

In addition to one or more of the features described above, or as an alternative, further embodiments of the method of cooling a gas turbine engine may include rotating, using the air turbine starter, rotational components of the gas turbine engine when the starter air valve is opened, the air turbine starter comprising a turbine wheel including a hub integrally attached to a turbine rotor shaft and a plurality of turbine blades extending radially from the hub, the turbine rotor shaft being operably connected to at least one of the rotational components and configured to rotate the rotational components when air flows through the turbine blades and rotates the turbine wheel.

Technical effects of embodiments of the present disclosure include utilizing a permanent magnet alternator operably connected to an aircraft main engine for cool-down motoring to prevent bowed rotor.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a schematic illustration of an aircraft engine starting system, according to an embodiment of the disclosure;
FIG. 2 is a schematic illustration of an example permanent magnet alternator of the aircraft engine starting system of FIG. 1, according to an embodiment of the disclosure;
FIG. 3 is a schematic illustration of an example air turbine starter of the aircraft engine starting system of FIG. 1, according to an embodiment of the disclosure;
FIG. 4 is a flow diagram illustrating a method of assembling an engine starting system for a gas turbine engine, according to an embodiment of the present disclosure; and
FIG. 5 is a flow diagram illustrating a method of cooling a gas turbine engine, according to an embodiment of the present disclosure.

### DETAILED DESCRIPTION

A detailed description of one or more embodiments of the disclosed apparatus and method are presented herein by way of exemplification and not limitation with reference to the Figures.

Various embodiments of the present disclosure are related to a bowed rotor start mitigation system in a gas turbine engine. Embodiments can include using a permanent magnet alternator to control a rotor speed of a gas turbine engine to mitigate a bowed rotor condition using a cool-down motoring process. Cool-down motoring may be performed by running an engine starting system at a lower speed with a longer duration than typically used for engine starting using a permanent magnet alternator to maintain a rotor speed and/or profile. Cool-down motoring (engine bowed rotor motoring) may be performed by the permanent magnet alternator, which may rotate the gas turbine engine continuously between about 0 to 3000 RPM (engine core speed).

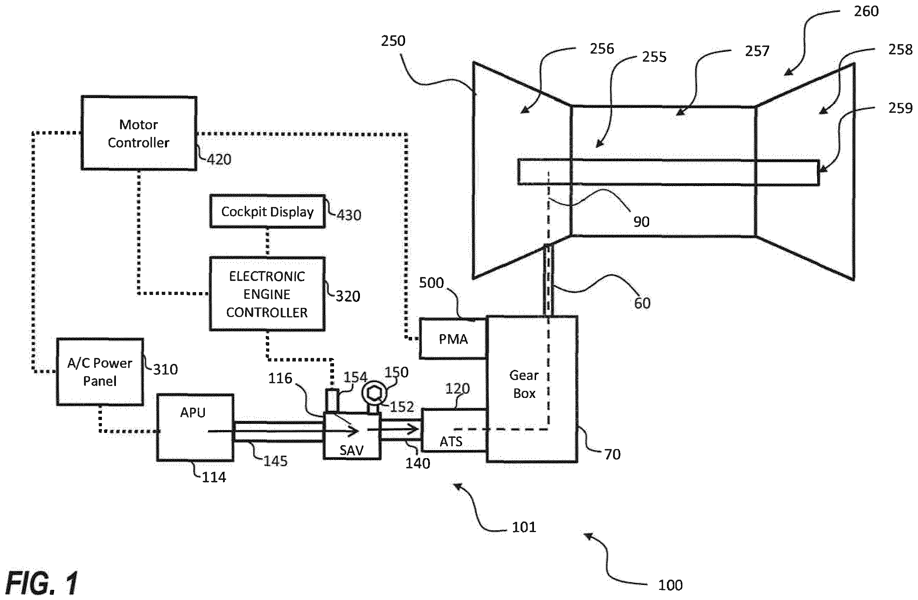

Referring now to the figures, FIG. 1 shows a block diagram of a gas turbine engine 250 and an associated engine starting system 100 with a valve system 101 according to an embodiment of the present disclosure. The valve system 101 includes a starter air valve (SAV) 116 operably connected in fluid communication with an air turbine starter (ATS) 120 of the engine starting system 100 through at least one duct 140. The valve system 101 is operable to receive a compressed air flow from a compressed air source through one or more ducts 145. In the illustrated embodiment, the compressed air source is an auxiliary power unit (APU) 114. The compressed air source may also be a ground cart or a cross-engine bleed.

An air turbine starter 120 of the engine starting system 100 is operably connected to the gas turbine engine 250 through an accessory gearbox 70 and drive shaft 60 (e.g., a tower shaft), as shown in FIG. 1. As depicted in the example of FIG. 1, the air turbine starter 120 is connected to the gas turbine engine 250 by a drive line 90, which runs from an output of the air turbine starter 120 to the accessory gearbox 70 through the drive shaft 60 to a rotor shaft 259 of the gas turbine engine 250. Operable connections can include gear mesh connections that in some instances can be selectively engaged or disengaged, for instance, through one or more clutches. The air turbine starter 120 is configured to initiate a startup process of the gas turbine engine 250 driving rotation of the rotor shaft 259 of a starting spool 255 of the gas turbine engine 250. The rotor shaft 259 operably connects an engine compressor 256 to an engine turbine 258. Thus, once the engine compressor 256 starts spinning, air is pulled into combustion chamber 257 and mixes with fuel for combustion. Once the air and fuel mixture combusts in the combustion chamber 257, a resulting compressed gas flow drives rotation of the engine turbine 258, which rotates the engine turbine 258 and subsequently the engine compressor 256. Once the startup process has been completed, the air turbine starter 120 can be disengaged from the gas turbine engine 250 to prevent over-speed conditions when the gas turbine engine 250 operates at its normal higher speeds. Although only a single instance of an engine compressor-turbine pair of starting spool 255 is depicted in the example of FIG. 1, it will be understood that embodiments can include any number of spools, such as high/mid/low pressure engine compressor-turbine pairs within the gas turbine engine 250.

The air turbine starter 120 is further operable to drive rotation of the rotor shaft 259 at a lower speed for a longer duration than typically used for engine starting in a motoring mode of operation (also referred to as cool-down motoring) to prevent/reduce a bowed rotor condition. If a bowed rotor condition has developed, for instance, due to a hot engine shutdown and without taking further immediate action, cool-down motoring may be performed by the air turbine starter 120 to reduce a bowed rotor condition by driving rotation of the rotor shaft 259.

A electronic engine controller 320, such as full authority digital engine control (FADEC), typically controls engine starting system 100, the gas turbine engine 250, and controls performance parameters of the gas turbine engine 250 such as for example engine temperature, engine, speed, and fuel flow. The electronic engine controller 320 may include at least one processor and at least one associated memory comprising computer-executable instructions that, when executed by the processor, cause the processor to perform various operations. The processor may be but is not limited to a single-processor or multi-processor system of any of a wide array of possible architectures, including FPGA, central processing unit (CPU), ASIC, digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

The electric engine controller 320 controls valve operation, for instance, modulation of the starter air valve 116 to control a motoring speed of the gas turbine engine 250 during cool-down motoring. The starter air valve 116 delivers air through a duct 140 to the air turbine starter 120. If the starter air valve 116 fails shut, a corresponding manual override 150 can be used to manually open the starter air valve 116. The manual override 150 can include a tool interface 152 to enable a ground crew to open the starter air valve 116. During regular operation, the starter air valve 116 may be opened and closed using a solenoid 154. The solenoid 154 may be modulated to control a motoring speed of the gas turbine engine 250 during cool-down motoring. The solenoid 154 may be in electrical communication with the electronic engine controller 320.

Alternatively, the motoring speed of the gas turbine engine 250 may also be controlled by a permanent magnet alternator (PMA) 500. Advantageously, the permanent magnet alternator 500 may be utilized for cool-down motoring in many scenarios including but not limited to when the solenoid 154 fails and can no longer modulate the starter air valve 116 for cool-down motoring. In the event the starter air valve 116 is failed and a manual start is required, the electronic engine controller 320 may transmit a message to be displayed on a cockpit display 320 indicating that a manual start is required. In this case, the permanent magnet alternator 500 could motor the gas turbine engine 250 until it is cooled and then the electronic engine controller 320 could provide a cockpit message to the cockpit display 430 indicating when the engine is cooled sufficiently to allow a crew member to manually open the starter air valve 116 using the manual override 150 and start the gas turbine engine 250. Also advantageously, the permanent magnet alternator 500 may be used regularly for cool-down motoring in order to reduce wear-tear on the starter air valve 116 and associated solenoid 154 that may be caused by the modulation of the starter air valve 116 when the starter air valve 116 performs cool down motoring.

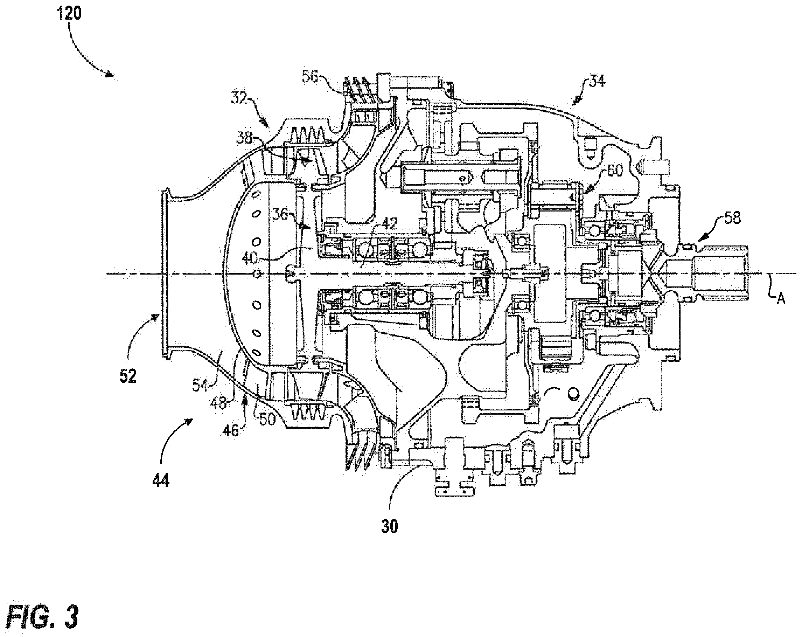

The permanent magnet alternator 500 may be used as the primary means for motoring the gas turbine engine 250 and the starter air valve 116 may be used as secondary means for motoring the gas turbine engine 350 or vice versa. The permanent magnet alternator 500 and the starter air valve 116 may also be used in combination with each other to motor the gas turbine engine 350. As seen in FIG.1, the permanent magnet alternator 500 may be operably connected to at least one of the rotational components 260 of the gas turbine engine 250. The accessory gear box 70 may operably connect the permanent magnet alternator 500 to at least one of the rotational components 260 of the gas turbine engine 250. The rotational components 260 may include but are not limited to the engine compressor 265, the engine turbine 258, and the rotor shaft 259 operably connecting the engine turbine 258 to the engine compressor 256. Each rotational component 260 is configured to rotate when any one of the rotational components 260 is rotated, thus the rotation components may rotate in unison. The permanent magnet alternator 500 is configured to rotate the rotational components 260 of the gas turbine engine 250 for cool-down motoring to prevent bowed rotor. The permanent magnet alternator 500 is electrically connected to the auxiliary power unit 114. As mentioned above, the auxiliary power unit 114 is configured to provide air to the air turbine starter 120 to rotate the turbine blades 38 (see FIG. 3). The auxiliary power unit 114 is also configured to generate electricity to power the permanent magnet alternator 500. The auxiliary power unit 114 may be electrically connected to the permanent magnet alternator 500 through an A/C power panel 310. The permanent magnet alternator 500 may also be used to generate electricity when the rotational components 260 are rotating under power of the gas turbine engine 250.

The permanent magnet alternator 500 may be controlled by the electronic engine controller 320 and/or a motor controller 420 electrically connected to the permanent magnet alternator 500. The motor controller 420 is in electronic communication with the permanent magnet alternator 500. The motor controller 420 is configured to command the permanent magnet alternator 500 to rotate the rotational components 260 at a selected angular velocity for a selected period of time to perform cool-down motoring. The motor controller 420 may include at least one processor and at least one associated memory comprising computer-executable instructions that, when executed by the processor, cause the processor to perform various operations. The processor may be but is not limited to a single-processor or multi-processor system of any of a wide array of possible architectures, including FPGA, central processing unit (CPU), ASIC, digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

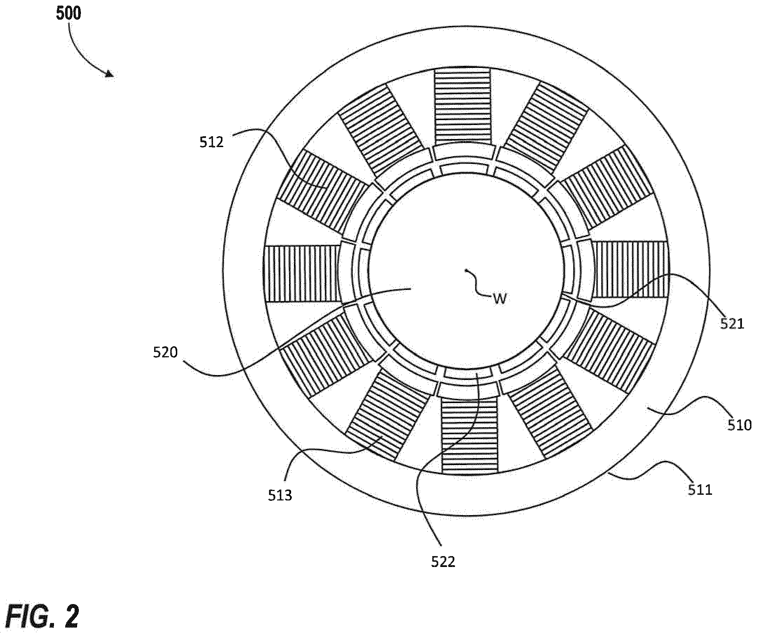

We refer now to FIG. 2, which shows a non-limiting example of a permanent magnet alternator 500. As seen in FIG. 2, the permanent magnet alternator 500 includes a rotor element 520 and a stator element 510 radially outward from the rotor element. The stator element 510 is configured to drive rotation of the rotor element 520 about the rotational axis W. The rotor element 520 includes an annular base member 521, an annular array of permanent magnetic materials 522 that are respectively coupled to an outer diameter of the annular base member 521. In accordance with further embodiments, the stator element 510 includes a hub 511, a plurality of spokes 512 extending radially inward from the hub 511 and conductive elements 513 that are wound around the spokes 512 to form windings. When the permanent magnet alternator 500 is activated, current is applied to the conductive elements 513 such that a flux field is generated and this flux field interacts with the permanent magnetic materials 522 to cause the rotor element 520 to rotate about the rotational axis W. The rotor element 520 may be operably connected to the rotational components 260 of the gas turbine engine. When the rotational components 260 are rotating under power of the gas turbine engine 250 (FIG. 1), the rotor element 520 may be rotated by the rotational components 260 to generate electricity.

Referring now to FIG. 3, FIG. 3 schematically illustrates an example of an air turbine starter 120 that is used to initiate the rotation of a gas turbine engine 250 (see FIG. 1), such as a turbofan engine through an accessory gearbox 70, as described above. As mentioned above, the air turbine starter 120 may serve as a primary or secondary means of motoring the gas turbine engine 250. The air turbine starter 120 generally includes a housing assembly 30 that includes at least a turbine section 32 and an output section 34. The turbine section 32 includes a turbine wheel 36 with a plurality of turbine blades 38, a hub 40, and a turbine rotor shaft 42. The turbine blades 38 of the turbine wheel 36 are located downstream of an inlet housing assembly 44 which includes an inlet housing 46 which contains a nozzle 48. The nozzle 48 includes a plurality of turbine vanes 50 which direct compressed air flow from an inlet 52 through an inlet flowpath 54. The compressed air flows past the vanes 50 drives the turbine wheel 36 then is exhausted through an outlet 56.

The turbine wheel 36 is driven by the compressed airflow such that the turbine rotor shaft 42 may mechanically drive a starter output shaft 58 though a gear system 60, such as a planetary gear system. The air turbine starter 120 thereby transmits relatively high loads through the gear system 60 to convert the pneumatic energy from the compressed air into mechanical energy to, for example, rotate the gas turbine engine 250 for start. The turbine blades 38 of the turbine wheel 36 and the vanes 50 of the nozzle 48 - both of which are defined herein as airfoils - may be defined with computational fluid dynamics (CFD) analytical software and are optimized to meet the specific performance requirements of a specific air turbine starter.

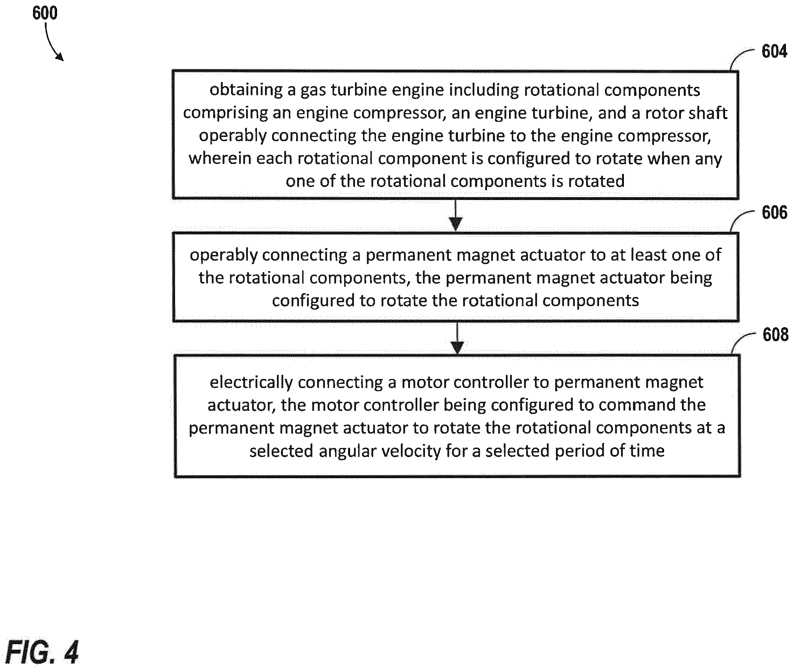

Turning now to FIG. 4 while continuing to reference FIGS. 1 to 3, FIG. 4 shows a flow diagram illustrating a method 600 of assembling an engine starting system 100 for a gas turbine engine 250, according to an embodiment of the present disclosure. At block 604, a gas turbine engine 250 is obtained. As mentioned above, the gas turbine engine 250 may include rotational components 260 comprising an engine compressor 256, an engine turbine 258, and a rotor shaft 259 operably connecting the engine turbine 258 to the engine compressor 256. Each rotational component 260 is configured to rotate when any one of the rotational components 260 is rotated. At block 606, a permanent magnet actuator 500 is operably connected to at least one of the rotational components 260. As mentioned above, the permanent magnet alternator 500 is configured to rotate the rotational components 260. At block 608, a motor controller 420 is electrically connected to the permanent magnet alternator 500. As mentioned above, the motor controller 420 is configured to command the permanent magnet alternator 500 to rotate the rotational components 260 at a selected angular velocity for a selected period of time for cool-down motoring.

The method 600 may also include: operably connecting an air turbine starter 120 to at least one of the rotational components 260. The air turbine starter 120 comprising a turbine wheel 36 including a hub 40 integrally attached to a turbine rotor shaft 42 and a plurality of turbine blades 38 extending radially outward from the hub 40. As mentioned above, the turbine rotor shaft 42 is configured to rotate the rotational components 260 when air flows through the turbine blades 38 and rotates the turbine wheel 36. The method 600 may further include: fluidly connecting an auxiliary power unit 310 to the air turbine starter 120. The auxiliary power unit 114 is configured to provide air to the air turbine starter 120 to rotate the turbine blades 38. The method 600 may also further include: electrically connecting the permanent magnet alternator 500 to the auxiliary power unit 114. The auxiliary power unit 114 is configured to generate electricity to power the permanent magnet alternator 500.

While the above description has described the flow process of FIG. 4 in a particular order, it should be appreciated that unless otherwise specifically required in the attached claims that the ordering of the steps may be varied.

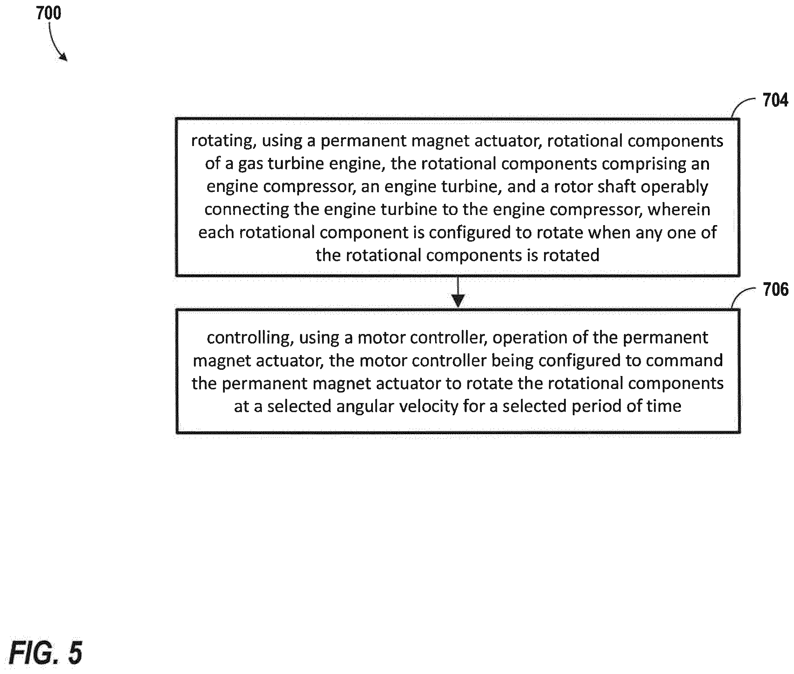

Turning now to FIG. 5 while continuing to reference FIGS. 1 to 3, FIG. 5 shows a flow diagram illustrating a method 700 of cooling a gas turbine engine 250, according to an embodiment of the present disclosure. At block 704, a permanent magnet alternator 500 rotates rotational components 260 of a gas turbine engine 250. As described above, the rotational components 260 comprising an engine compressor 256, an engine turbine 258, and a rotor shaft 259 operably connecting the engine turbine 258 to the engine compressor 256. Each rotational component 260 is configured to rotate when any one of the rotational components 260 is rotated. At block 706, a motor controller 320 controls operation of the permanent magnet alternator 500. The motor controller 320 being configured to command the permanent magnet alternator 500 to rotate the rotational components 260 at a selected angular velocity for a selected period of time. The rotation of the rotational components 260 at selected angular velocity for a selected period of time is engine cool-down motoring.

In the event that the engine starter system 100 also includes a starter air valve 116 and an air turbine starter 120, the method 700 may also include detecting a failure in a starter air valve 116 prior to rotating the gas turbine engine 250 with the permanent magnet alternator 500. As mentioned above, the permanent magnet alternator 500 may be used as a secondary means of cool-down motoring when the start air valve 116 fails. As also mentioned above, the starter air valve 116 is fluidly connected to an air turbine starter 120 and configured to provide air to an air turbine starter 120. The air turbine starter 120 is operably connected to at least one of the rotational components 260 and configured to rotate the rotational components 260. The method 700 may also include: detecting when a temperature of the gas turbine engine 250 is less than a selected temperature; and displaying a message on a cockpit display when the temperature of the gas turbine engine 250 is less than a selected temperature. The message may indicate that the gas turbine engine 250 has sufficiently cooled.

The method 700 may further include stopping the utilization of the permanent magnet alternator 500 to rotate the gas turbine engine 250 when a temperature of the gas turbine engine 250 is less than a selected temperature. When the gas turbine engine 250 is less than the selected temperature the cool-down motoring may be complete and the permanent magnet alternator 500 may no longer be needed to rotate the rotation components 260 of the gas turbine engine 250. Following the completion of the cool-down motoring, the pilot may desire to start the gas turbine engine 250, and thus the method 700 may also include: opening the starter air valve 116 after the message has been displayed on the cockpit display 430 indicating that a temperature of the gas turbine engine 250 is less than a selected temperature. Once the air valve 116 is opened, the method 700 may further include: rotating, using the air turbine starter 120, rotational components 260 of the gas turbine engine 250 when the starter air valve 116 is opened.

While the above description has described the flow process of FIG. 5 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fibre optics, or via electromagnetic radiation, wherein, when the computer program code is loaded into an executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An engine starting system (100), the engine starting system (100) comprising:
a gas turbine engine (250) including rotational components comprising an engine compressor (256), an engine turbine (258), and a rotor shaft (259) operably connecting the engine turbine (258) to the engine compressor (256), wherein each rotational component is configured to rotate when any one of the rotational components is rotated;
an air turbine starter (120) comprising a turbine wheel (36) including a hub (40) integrally attached to a turbine rotor shaft (42) and a plurality of turbine blades (38) extending radially from the hub (40), the turbine rotor shaft (42) being operably connected to at least one of the rotational components and configured to rotate the rotational components when air flows through the turbine blades (38) and rotates the turbine wheel (36); and
**characterised by** comprising:
a permanent magnet alternator (500) operably connected to at least one of the rotational components, the permanent magnet alternator (500) being configured to rotate the rotational components;
and
a motor controller (420) in electronic communication with the permanent magnet alternator (500), the motor controller (420) being configured to command the permanent magnet alternator (500) to rotate the rotational components at a selected angular velocity for a selected period of time.

2. The engine starting system of claim 1, further comprising:
an accessory gearbox (70) operably connecting the permanent magnet alternator (500) to at least one of the rotational components.

3. The engine starting system of claim 1, wherein:
the permanent magnet alternator (500) is configured to generate electricity when the rotational components are rotating under power of the gas turbine engine (100).

4. The engine starting system of claim 1, further comprising:
an auxiliary power unit (114) fluidly connected to the air turbine starter (120) and electrically connected to the permanent magnet alternator (500), the auxiliary power unit (114) being configured to generate electricity to power the permanent magnet alternator (500) and provide air to the air turbine starter (120) to rotate the turbine blades (38).

5. The engine starting system of claim 4, further comprising:
a starter air valve (116) fluidly connecting the auxiliary power unit (114) to the air turbine starter (120), the starter air valve (116) being configured to adjust airflow from the auxiliary power unit (114) to the air turbine starter (120).

6. A method of assembling the engine starting system (100) according to claim 1, the method comprising:
obtaining the gas turbine engine (250);
operably connecting the permanent magnet alternator (500) to at least one of the rotational components;
electrically connecting the motor controller (420) to the permanent magnet alternator (500); and
operably connecting the air turbine starter (120) to at least one of the rotational components.

7. The method of claim 6, wherein:
the permanent magnet alternator (500) is operably connected to at least one of the rotational components through an accessory gearbox (70).

8. The method of claim 6, wherein:
the permanent magnet alternator (500) generates electricity when the rotational components are rotating under power of the gas turbine engine.

9. The method of claim 6, further comprising:
fluidly connecting an auxiliary power unit (114) to the air turbine starter (120), the auxiliary power unit (114) being configured to provide air to the air turbine starter (120) to rotate the turbine blades (48); and
electrically connecting the permanent magnet alternator (500) to the auxiliary power unit (114), the auxiliary power unit (114) being configured to generate electricity to power the permanent magnet alternator (500).

10. The method of claim 9, wherein:
a starter air valve (116) fluidly connects the auxiliary power unit (114) to the air turbine starter (120), the starter air valve (116) being configured to adjust airflow from the auxiliary power unit (114) to the air turbine starter (120).

## Patentansprüche

1. Triebwerkstartsystem (100), wobei das Triebwerkstartsystem (100) Folgendes umfasst:
ein Gasturbinentriebwerk (250), das Rotationskomponenten beinhaltet, die einen Triebwerkskompressor (256), eine Triebwerksturbine (258) und eine Rotorwelle (259) umfassen, die die Triebwerksturbine (258) mit dem Triebwerkskompressor (256) wirkverbindet, wobei jede Rotationskomponente dazu konfiguriert ist, zu rotieren, wenn eine beliebige der Rotationskomponenten rotiert wird;
einen Luftturbinenstarter (120), der ein Turbinenrad (36) umfasst, das eine Nabe (40), die einstückig an eine Turbinenrotorwelle (42) befestigt ist, und eine Vielzahl von Turbinenblättern (38) beinhaltet, die sich radial von der Nabe (40) erstrecken, wobei die Turbinenrotorwelle (42) mit mindestens einer der Rotationskomponenten wirkverbunden und dazu konfiguriert ist, die Rotationskomponenten zu rotieren, wenn Luft durch die Turbinenblätter (38) strömt und das Turbinenrad (36) rotiert; und
**dadurch gekennzeichnet ist, dass** es Folgendes umfasst:
eine Permanentmagnet-Wechselstrommaschine (500), die mit mindestens einer der Rotationskomponenten wirkverbunden ist, wobei die eine Permanentmagnet-Wechselstrommaschine (500) dazu konfiguriert ist, die Rotationskomponenten zu rotieren;
und
eine Triebwerkssteuerung (420) in elektronischer Verbindung mit der Permanentmagnet-Wechselstrommaschine (500), wobei die Triebwerkssteuerung (420) dazu konfiguriert ist, der Permanentmagnet-Wechselstrommaschine (500) zu befehlen, die Rotationskomponenten in einer ausgewählten Winkelgeschwindigkeit für einen ausgewählten Zeitraum zu rotieren.

2. Triebwerkstartsystem nach Anspruch 1, ferner Folgendes umfassend:
ein Zusatzgetriebe (70), das die Permanentmagnet-Wechselstrommaschine (500) mit mindestens einer der Rotationskomponenten wirkverbindet.

3. Triebwerkstartsystem nach Anspruch 1, wobei:
die Permanentmagnet-Wechselstrommaschine (500) dazu konfiguriert ist, Elektrizität zu generieren, wenn die Rotationskomponenten durch Antrieb des Gasturbinentriebwerks (100) rotieren.

4. Triebwerkstartsystem nach Anspruch 1, ferner Folgendes umfassend:
eine Hilfsantriebseinheit (114), die fluidisch mit dem Luftturbinenstarter (120) verbunden und elektrisch mit der Permanentmagnet-Wechselstrommaschine (500) verbunden ist, wobei die Hilfsantriebseinheit (114) dazu konfiguriert ist, Elektrizität zu generieren, um die Permanentmagnet-Wechselstrommaschine (500) anzutreiben und dem Luftturbinenstarter (120) Luft bereitzustellen, um die Turbinenblätter (38) zu rotieren.

5. Triebwerkstartsystem nach Anspruch 4, ferner Folgendes umfassend:
ein Starterluftventil (116), das die Hilfsantriebseinheit (114) mit dem Luftturbinenstarter (120) fluidisch verbindet, wobei das Starterluftventil (116) dazu konfiguriert ist, Luftströmung von der Hilfsantriebseinheit (114) zu dem Luftturbinenstarter (120) anzupassen.

6. Verfahren zum Montieren des Triebwerkstartsystems (100) nach Anspruch 1, wobei das Verfahren Folgendes umfasst:
Erhalten des Gasturbinentriebwerks (250);
Wirkverbinden der Permanentmagnet-Wechselstrommaschine (500) mit mindestens einer der Rotationskomponenten;
elektrisches Verbinden der Triebwerkssteuerung (420) mit der Permanentmagnet-Wechselstrommaschine (500);
Wirkverbinden des Luftturbinenstarters (120) mit mindestens einer der Rotationskomponenten.

7. Verfahren nach Anspruch 6, wobei:
die Permanentmagnet-Wechselstrommaschine (500) mit mindestens einer der Rotationskomponenten durch ein Zusatzgetriebe (70) wirkverbunden ist.

8. Verfahren nach Anspruch 6, wobei:
die Permanentmagnet-Wechselstrommaschine (500) Elektrizität generiert, wenn die Rotationskomponenten durch Antrieb des Gasturbinentriebwerks rotieren.

9. Verfahren nach Anspruch 6, ferner Folgendes umfassend:
fluidisches Verbinden einer Hilfsantriebseinheit (114) mit dem Luftturbinenstarter (120), wobei die Hilfsantriebseinheit (114) dazu konfiguriert ist, dem Luftturbinenstarter (120) Luft bereitzustellen, um die Turbinenblätter (48) zu rotieren; und
elektrisches Verbinden der Permanentmagnet-Wechselstrommaschine (500) mit der Hilfsantriebseinheit (114), wobei die Hilfsantriebseinheit (114) dazu konfiguriert ist, Elektrizität zu generieren, um die Permanentmagnet-Wechselstrommaschine (500) anzutreiben.

10. Verfahren nach Anspruch 9, wobei:
ein Starterluftventil (116) die Hilfsantriebeinheit (114) mit dem Luftturbinenstarter (120) fluidisch verbindet, wobei das Starterluftventil (116) dazu konfiguriert ist, Luftströmung von der Hilfsantriebseinheit (114) zu dem Luftturbinenstarter (120) anzupassen.

## Revendications

1. Système de démarrage de moteur (100), le système de démarrage de moteur (100) comprenant :
un moteur à turbine à gaz (250) comprenant des composants rotatifs comprenant un compresseur de moteur (256), une turbine de moteur (258) et un arbre de rotor (259) connectant fonctionnellement la turbine de moteur (258) au compresseur de moteur (256), dans lequel chaque composant rotatif est configuré pour effectuer une rotation lorsque n'importe lequel des composants rotatifs est entraîné en rotation ;
un démarreur de turbine pneumatique (120) comprenant une roue de turbine (36) comprenant un moyeu (40) fixé d'un seul tenant à un arbre de rotor de turbine (42) et une pluralité d'aubes de turbine (38) s'étendant radialement à partir du moyeu (40),
l'arbre de rotor de turbine (42) étant fonctionnellement connecté à au moins un des composants rotatifs et configuré pour entraîner en rotation les composants rotatifs lorsque de l'air s'écoule à travers les aubes de turbine (38) et entraîne en rotation la roue de turbine (36) ; et
**caractérisé en ce qu'**il comprend :
un alternateur à aimant permanent (500) fonctionnellement connecté à au moins un des composants rotatifs, l'alternateur à aimant permanent (500) étant configuré pour entraîner en rotation les composants rotatifs ;
et
un dispositif de commande de moteur (420) en communication électronique avec l'alternateur à aimant permanent (500) le dispositif de commande de moteur (420) étant configuré pour commander l'alternateur à aimant permanent (500) pour entraîner en rotation les composants rotatifs à une vitesse angulaire sélectionnée pour une période de temps sélectionnée.

2. Système de démarrage de moteur selon la revendication 1, comprenant en outre :
un relais d'accessoires (70) connectant fonctionnellement l'alternateur à aimant permanent (500) à au moins un des composants rotatifs.

3. Système de démarrage de moteur selon la revendication 1, dans lequel :
l'alternateur à aimant permanent (500) est configuré pour générer de l'électricité lorsque les composants rotatifs sont entraînés en rotation par la puissance du moteur à turbine à gaz (100).

4. Système de démarrage de moteur selon la revendication 1, comprenant en outre :
une unité d'alimentation auxiliaire (114) connectée de manière fluidique au démarreur de turbine pneumatique (120) et connectée électriquement à l'alternateur à aimant permanent (500), l'unité d'alimentation auxiliaire (114) étant configurée pour générer de l'électricité pour alimenter l'alternateur à aimant permanent (500) et fournir de l'air au démarreur de turbine pneumatique (120) pour entraîner en rotation les aubes de turbine (38).

5. Système de démarrage de moteur selon la revendication 4, comprenant en outre :
un clapet d'air de démarreur (116) connectant de manière fluidique l'unité d'alimentation auxiliaire (114) au démarreur de turbine pneumatique (120), le clapet d'air de démarreur (116) étant configuré pour ajuster le flux d'air de l'unité d'alimentation auxiliaire (114) au démarreur de turbine pneumatique (120).

6. Procédé d'assemblage du système de démarrage de moteur (100) selon la revendication 1, le procédé comprenant :
l'obtention du moteur à turbine à gaz (250) ;
la connexion fonctionnelle de l'alternateur à aimant permanent (500) à au moins un des composants rotatifs ;
la connexion électrique du dispositif de commande de moteur (420) à l'alternateur à aimant permanent (500) ;
la connexion fonctionnelle du démarreur de turbine pneumatique (120) à au moins un des composants rotatifs.

7. Procédé selon la revendication 6, dans lequel :
l'alternateur à aimant permanent (500) est fonctionnellement connecté à au moins un des composants rotatifs par l'intermédiaire d'un relais d'accessoires (70).

8. Procédé selon la revendication 6, dans lequel :
l'alternateur à aimant permanent (500) génère de l'électricité lorsque les composants rotatifs sont entraînés en rotation par la puissance du moteur à turbine à gaz.

9. Procédé selon la revendication 6, comprenant en outre :
la connexion fluidique d'une unité d'alimentation auxiliaire (114) au démarreur de turbine pneumatique (120) l'unité d'alimentation auxiliaire (114) étant configurée pour fournir de l'air au démarreur de turbine pneumatique (120) pour entraîner en rotation les aubes de turbine (48) ; et
la connexion électrique de l'alternateur à aimant permanent (500) à l'unité d'alimentation auxiliaire (114), l'unité d'alimentation auxiliaire (114) étant configurée pour générer de l'électricité pour alimenter l'alternateur à aimant permanent (500).

10. Procédé selon la revendication 9, dans lequel :
le clapet d'air de démarreur (116) connecte de manière fluidique l'unité d'alimentation auxiliaire (114) au démarreur de turbine pneumatique (120), le clapet d'air de démarreur (116) étant configuré pour ajuster le flux d'air de l'unité d'alimentation auxiliaire (114) au démarreur de turbine pneumatique (120).
